# EUROPEAN PATENT APPLICATION

(11) **EP 4 762 921 A1**
(43) Date of publication of application: **24.06.2026**
(21) Application number: 25219988.0
(22) Date of filing: 02.12.2025
(51) Int. Cl.: A01K 89/01

(54) **FISHING SPINNING REEL**

(30) Priority: 12.12.2024 JP 2024218085
(71) Applicant: Globeride, Inc., Higashikurume-shi, Tokyo 203-8511 (JP)
(72) Inventor: UENO, Hayato, Higashikurume-shi,, 203-8511 (JP)
(74) Representative: Boult Wade Tennant LLP

(57) **Abstract**

A fishing spinning reel (1) comprises a fishing line guide device that is provided between an arm lever (15) and a line slider and guides a fishing line to a spool (5), in which the fishing line guide device comprises a support shaft (23) fixed between the arm lever and the line slider, and a line roller (28) that is supported to be rotatable via ball bearings (25A, 25B) positioned and fixed to the support shaft. On the support shaft, a flange (23) having a larger diameter than inner rings (26) of the ball bearings is formed on the arm lever side, and the arm lever is fixed in abutment against the flange.

## Description

### BACKGROUND OF THE INVENTION

### 1. TECHNICAL FIELD

The present invention relates to a fishing spinning reel.

### 2. DESCRIPTION OF THE RELATED ART

A fishing spinning reel is configured such that a rotor rotates by a winding rotation operation of a handle, and a spool around which a fishing line is wound is reciprocatingly driven forward and rearward. The rotor includes a pair of arm levers, and a fishing line guide device is provided on one of support arm sides. The fishing line is guided via a line roller of the fishing line guide device, and is evenly wound around the spool that moves forward and rearward.

As the fishing line guide device described above, for example, as disclosed in JP 2009-278915 A, a configuration is known in which a ball bearing is installed between a support shaft and a line roller to improve the rotational performance of the line roller. The line roller is arranged between a line slider to which a bail is attached and an arm lever, and a ball bearing is disposed on the support shaft on which a female thread is formed. Collar members in which annular locking portions are formed are interposed between an inner ring side and an outer ring side of the ball bearing, thereby preventing displacement of the ball bearing. In addition, the support shaft is fixed by being screwed from the line slider side in a state where the support shaft is inserted from the arm lever side.

### RELEVANT REFERENCES

### LIST OF RELEVANT PATENT LITERATURE

Patent Literature 1: Japanese Patent Application Publication No. 2009-278915

### SUMMARY OF THE INVENTION

When the line roller described above guides a fishing line, a large load may be applied from the fishing line in some cases. When a large load is applied to the line roller, a gap may be generated between the arm lever and the support shaft, and in a case where such a gap is generated, play may occur at the line roller portion and the screw may be loosened.

An object of the present invention is to provide a fishing spinning reel comprising a fishing line guide device in which a line roller is stably supported.

A fishing spinning reel according to an aspect of the present invention comprises a spool around which a fishing line is wound; a rotor comprising a pair of support arms that rotate around the spool; arm levers respectively supported at distal end sides of the pair of support arms to be rotatable; and a fishing line guide device that is provided between one of the arm levers and a line slider where one end side of a bail picking up a fishing line is provided, and that guides the fishing line to the spool, in which the fishing line guide device comprises a support shaft fixed between the arm lever and the line slider, and a line roller that is supported to be rotatable via a ball bearing positioned and fixed to the support shaft, on the support shaft, a flange having a larger diameter than an inner ring of the ball bearing is formed on the arm lever side, and the arm lever is fixed in abutment against the flange.

In the fishing line guide device of the fishing spinning reel having the above configuration, even when a large load is applied from the fishing line to the line roller, the force acting on the ball bearing that supports the line roller, particularly the force acting in the axial direction, is received by the flange portion. As a result, a gap is less likely to occur between the arm lever and the support shaft, and thus loosening of the screw member, which fixes the support shaft, due to play in the line roller portion is prevented.

According to the present invention, a fishing spinning reel comprising a fishing line guide device in which a line roller is stably supported can be obtained.

### BRIEF DESCRIPTION OF THE DRAWINGS

FIG. 1 is a side view illustrating an embodiment of a fishing spinning reel;
FIG. 2 is a view illustrating an internal configuration of a fishing line guide device of the fishing spinning reel illustrated in FIG. 1;
FIG. 3 is a sectional view taken along line A-A of FIG. 2;
FIG. 4 is a view illustrating an internal configuration of a second embodiment of a fishing line guide device; and
FIG. 5 is a view illustrating an internal configuration of a third embodiment of a fishing line guide device.

### DETAILED DESCRIPTION

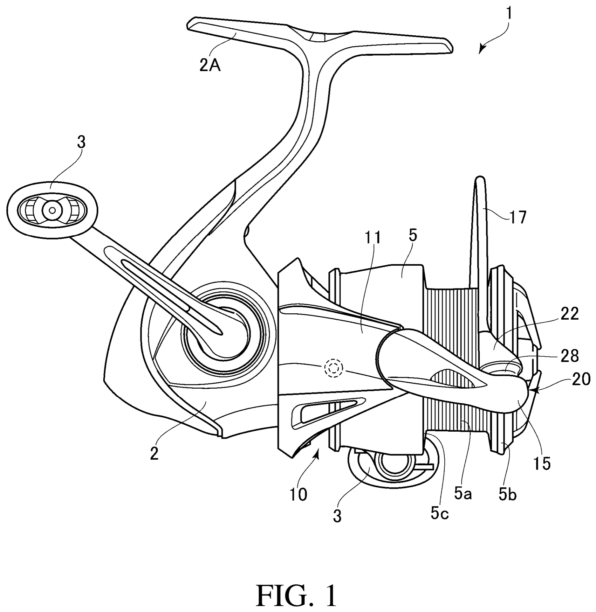

Hereinafter, an embodiment of a fishing spinning reel according to the present invention will be specifically described with reference to FIGS. 1 to 3.

A foot portion 2A to be mounted on a fishing rod is formed on a reel body 2 of a fishing spinning reel 1. Inside the reel body 2, a handle shaft for operating a handle 3 for winding is rotatably supported via a bearing. In addition, a known driving force transmission mechanism is coupled to the handle shaft, and, in accordance with a rotation operation of the handle 3, a rotor 10 is rotationally driven and a spool 5, around which a fishing line is wound, is reciprocatingly driven forward and rearward via a well-known oscillation mechanism.

The spool 5 is formed of, for example, metal having a small specific gravity such as aluminum, an aluminum alloy, or a magnesium alloy, or of a synthetic resin material, and comprises a fishing line winding drum portion 5a around which a fishing line is wound, and a front flange portion 5b and a rear flange portion (skirt portion) 5c that regulate a line winding amount of the fishing line winding drum portion 5a in the front-rear direction.

A pair of support arms 11 (only one is illustrated) are formed on the rotor 10 so as to extend forward in an axial direction at an interval of approximately 180° so as to face each other, and the spool 5 is positioned between the pair of support arms and is reciprocatingly driven forward and rearward via a well-known oscillation mechanism. Arm levers (only one is illustrated) 15 are supported at distal end portions of both support arms so as to be rotatable between a fishing line winding position and a fishing line releasing position. In addition, a base end portion of a bail 17, which has a semi-annular shape and picks up a fishing line, is attached to each of the bail support members, and the bail 17 is rotatable together with the arm lever 15.

A fishing line guide device 20 for guiding a fishing line to the spool 5 is provided at the distal end of one of the arm levers 15. The fishing line guide device 20 comprises a line slider 22 on which one end of the bail 17 is provided, and a rotatable line roller 28 that guides a fishing line and is disposed between the arm lever 15 and the line slider 22.

In the configuration described above, when the handle 3 is operated for winding rotation, the rotor 10 is rotationally driven via a driving force transmission mechanism, and the spool 5 is moved forward and rearward via an oscillation mechanism. As a result, the fishing line is evenly wound around the spool 5 without being biased, while sliding on the line roller 28 of the fishing line guide device 20.

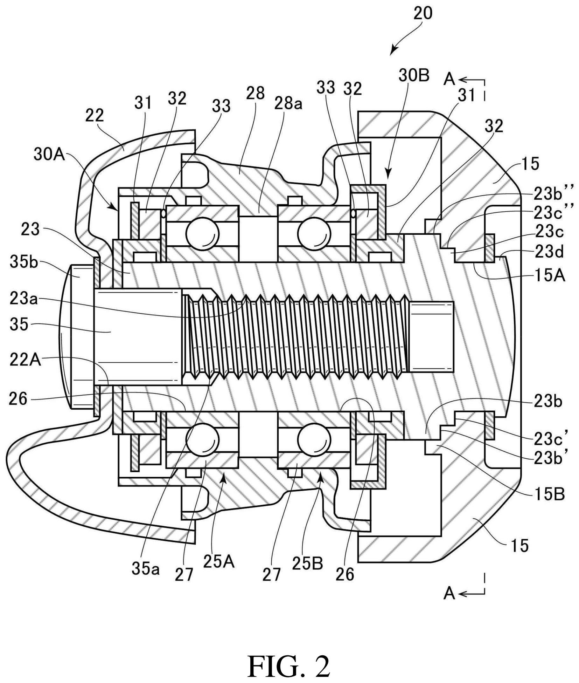

Next, the fishing line guide device 20 of the present embodiment will be described. As illustrated in FIG. 2, the fishing line guide device 20 of the present embodiment comprises a support shaft 23 that is fixed between the arm lever 15 and the line slider 22, ball bearings (bearings) 25A and 25B that are positioned and fixed on the support shaft 23, and the line roller 28 that is rotatably supported on the support shaft 23 via the ball bearings 25A and 25B. A plurality of (two) ball bearings illustrated in the drawing are arranged along the axial direction at a predetermined interval, but one ball bearing may be used.

The line slider 22 is formed to guide a fishing line from the base end of the bail 17 to the line roller 28. In the present embodiment, the line slider 22 is formed separately from the support shaft 23 and is configured such that the support shaft 23 can be inserted from the arm lever 15 side. That is, when the support shaft 23 and the line slider 22 are formed integrally, in a case where a flange, which will be described later, is to be formed on the support shaft, the ball bearing cannot be installed; however, by forming the line slider 22 and the support shaft 23 separately, the ball bearing can be installed even when a flange is formed on the support shaft 23. The support shaft 23 is configured as a blind-threaded portion extending in the axial direction and having an opening on the line slider side, and a female thread portion 23a is formed on an inner surface of the opening.

An annular protrusion 28a protruding radially inward is formed at an intermediate portion of the line roller 28, and side surfaces of outer rings 27 of the ball bearings 25A and 25B are positioned by being abutted against respective sides of the annular protrusion 28a.

Magnetic sealing mechanisms 30A and 30B are arranged on the support shaft 23 adjacent to the ball bearings 25A and 25B. The magnetic sealing mechanisms 30A and 30B of the present embodiment comprise pole plates 31 formed of magnetic bodies on which ring-shaped magnets 32 are fixed and which are supported on the support shaft 23 so as to face outer surfaces of the respective ball bearings, and a magnetic circuit is formed between the outer surfaces of the respective bearings and the pole plates 31. By holding a magnetic fluid 33 in a gap between the magnets and the outer surfaces of the bearings, the ball bearings 25A and 25B are sealed. In addition, the magnetic sealing mechanisms 30A and 30B are abutted against inner rings 26 of the ball bearings 25A and 25B with O-rings (washers) interposed therebetween, and also have a function of restricting the ball bearings.

On the support shaft 23, a flange 23b having a diameter larger than that of the inner rings 26 of the ball bearings 25A and 25B is formed on the arm lever 15 side. That is, the flange 23b having a diameter larger than an inner diameter of the inner ring 26 (protruding radially outward from a surface of the support shaft 23) is formed. The arm lever 15 is fixed in abutment against the side surface (restriction wall) 23b' of the flange 23b, and the arm lever 15 is also superposed on and fixed to a radial peripheral surface 23b" of the flange 23b. Furthermore, on an outer peripheral surface of the support shaft 23 of the present embodiment, a stepped portion 23c that is reduced in diameter in a stepwise manner from the flange 23b outward in the axial direction is formed continuously with the flange 23b. The arm lever 15 is fixed in abutment against the side surface (restriction wall) 23c' of the stepped portion 23c, similarly to the side surface (restriction wall) 23b' of the flange 23b, and the arm lever 15 is also superposed on and fixed to a radial peripheral surface 23c" of the stepped portion 23c.

Openings 15A and 22A are respectively formed in the arm lever 15 and the line slider 22. The support shaft 23 is inserted from the opening 15A side, and a screw member 35 for fixing the support shaft 23 and the line slider 22 is inserted from the line slider side into the opening 22A.

The support shaft 23 is fixed by screwing the screw member 35, which is inserted through the opening 22A of the line slider 22. That is, the support shaft 23 is fixed by tightening the screw member 35 by screwing a male thread portion 35a of the screw member 35 into the female thread portion 23a formed on the inner surface of the support shaft 23. The screw member 35 may alternatively be inserted and screwed from the arm lever side.

In this case, the end portion of the support shaft 23 on the arm lever 15 side is formed to have a length that protrudes from the opening 15A, and the arm lever 15 and the support shaft 23 are integrated by caulking a portion 23d protruding from the arm lever 15. That is, by fixing the protruding side of the support shaft 23 by caulking, an engagement length between the two components can be minimized, thereby enabling the arm lever 15 to be made thin and compact and suppressing an increase in inertia. In addition, because the arm lever 15 becomes compact, entanglement of the fishing line is less likely to occur, and line troubles can be prevented.

Furthermore, because the support shaft 23 and the arm lever 15 are integrated by caulking, a bearing surface can be enlarged in association with the configuration of the stepped portion 23c, and a fixing portion between the support shaft 23 and the arm lever 15 can be stabilized. As a result, even when high tension acts on the support shaft 23, a receiving surface of the arm lever 15 is less likely to buckle, thereby preventing intrusion of foreign matter and preventing corrosion.

In addition, by configuring the support shaft 23 to be caulked on the arm lever 15 side, the screw member 35 and the support shaft 23 can be inserted from the line slider 22 side, enabling the screw member 35 and the line slider 22 to be positioned closer to the center compared to the reels in the related art. Furthermore, because a head portion 35b of the screw member 35, which adds weight, is located on the inner side when the rotor rotates, it is possible to reduce inertia. In addition, in the present embodiment, the arm lever 15 side of the support shaft 23 is formed to be bottomed, and since the screw member is not screwed from the arm lever side, the head portion of the screw member is not exposed, thereby improving the appearance.

Note that the caulking can be performed by press working or high-spin processing; however, in order to enable the caulking to be accurately performed without any misalignment, the present embodiment fixes the arm lever 15 and the support shaft 23 by high-spin caulking. In addition, in a case where such caulking processing is performed, it is preferable to use metal (the arm lever is made of aluminum or the like, the support shaft and the screw member are made of SUS or the like.) so as not to cause cracking, breakage, or the like during processing.

It is preferable that the screw member 35 is configured to be screwed into the support shaft 23 over the entire length of the line roller 28 in the axial direction. With this configuration, when tension of the fishing line is applied from the line roller 28, the tension can be received by the screw member 35, which has a length longer than the length of the line roller 28 in the axial direction, and thus play or the like can be made less likely to occur.

In the configuration of the present embodiment, the inner rings 26 of the ball bearings 25A and 25B are in contact with the outer peripheral surface of the support shaft 23, and the contact surface between the arm lever 15 and the support shaft 23 (the side surface 23b' and the peripheral surface 23b" of the flange 23b, and the side surface 23c' and the peripheral surface 23c" of the stepped portion 23c) is located outward of the line roller 28 in the axial direction. As a result, the force applied from the fishing line can be distributed, and play or the like can be effectively suppressed. In particular, because the contact portions are tightly fitted to the support shaft 23 in a stepwise manner as described above, the number of joining surfaces increases, and the force in the axial direction acting on the ball bearings 25A and 25B that support the line roller 28 can be effectively received at the flange portion. As a result, a gap is less likely to occur between the arm lever 15 and the support shaft 23, and thus loosening of the screw member 35, which fixes the support shaft 23, due to play in the line roller portion is prevented.

In addition, since the contact surfaces (abutting surfaces) between the arm lever 15 and the support shaft 23 are located outward of the line roller 28 in the axial direction, no joint exists on the inner side of the inner rings 26 of the ball bearings 25A and 25B. Therefore, even when a large load is applied to the line roller 28 and a large impact is transmitted through the ball bearings 25A and 25B, no play occurs.

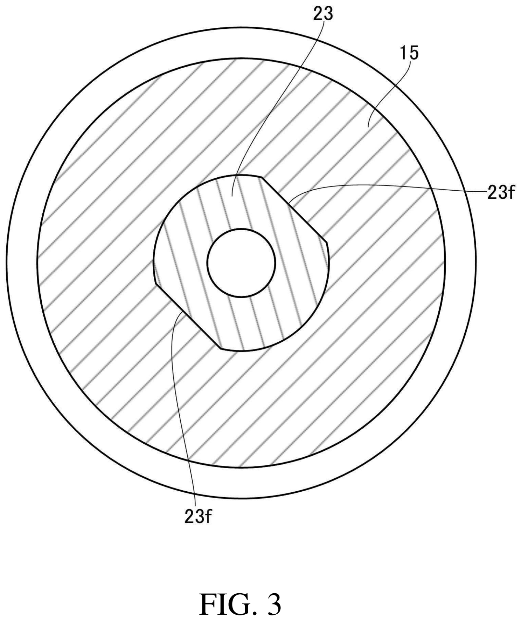

As illustrated in FIG. 3, it is preferable that a non-circular sectional portion is formed on the support shaft 23 and that the arm lever 15 is fitted to the non-circular sectional portion to prevent rotation. For example, by forming a slit portion 23f in the cross section of the support shaft 23 to form an oval cross section, rotation of the support shaft 23 can be prevented, and thereby play of the arm lever 15 with respect to the support shaft does not occur.

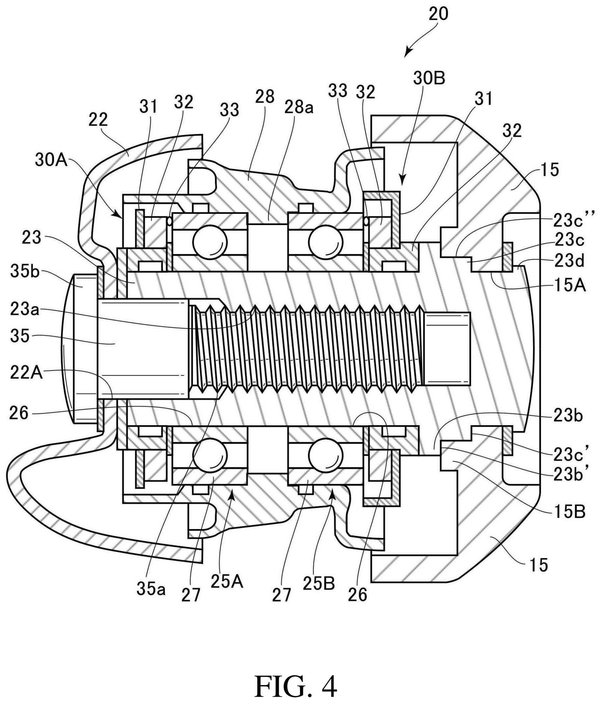

FIG. 4 is a view illustrating an internal configuration of a second embodiment of the fishing line guide device. Note that, In the embodiment described below, configurations identical to those of the first embodiment illustrated in FIG. 2 are assigned the same reference numerals, and detailed descriptions thereof are omitted.

In the present embodiment, a projection 15B, which is formed to project toward the line slider side in a central region of the arm lever 15, is brought into abutment with the side surface (restriction wall) 23b' of the flange 23b formed on the support shaft 23. The projection 15B comprises a stepped portion that gradually decreases in diameter toward the outer side in the axial direction, and the inner surface of the projection 15B is fixed to the side surface (restriction wall) 23c' of the stepped portion 23c formed continuously with the flange 23b, as well as to the radial peripheral surface 23c" of the stepped portion 23c.

In this manner, by forming the projection 15B in the central region of the arm lever 15 and bringing the support shaft 23 into abutment with this portion, it is possible to increase the joint area to stably receive the force acting in the axial direction, and it is possible to effectively suppress play.

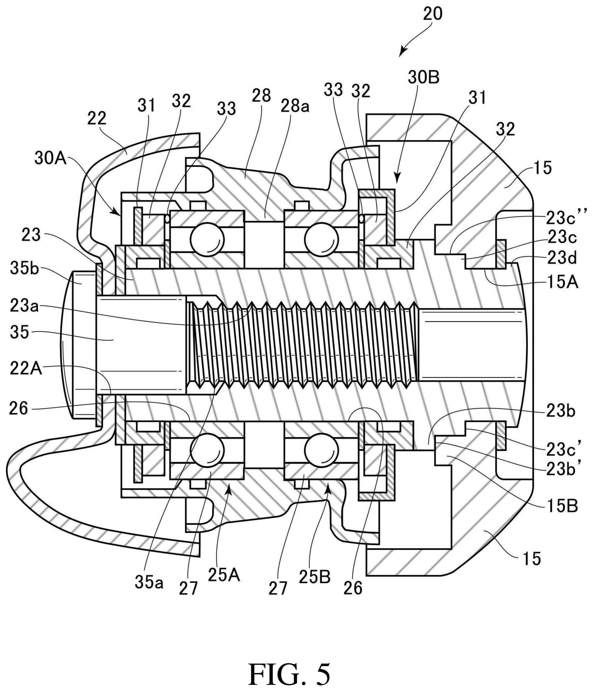

FIG. 5 is a view illustrating an internal configuration of a third embodiment of the fishing line guide device. In the present embodiment, a portion of the support shaft 23 of the second embodiment where the screw member 35 is screwed is formed as a through-hole open on the arm lever side (an opening is formed). In addition, the portion 23d protruding from the arm lever 15 is fixed to the arm lever 15 by caulking performed by high-spin processing.

With such a configuration, the screw member 35 can be easily threaded, and the manufacturing cost can be reduced.

The embodiments of the present invention have been described above, but the present invention is not limited to the above-described embodiments and may be modified in various ways.

For example, the flange 23b formed on the support shaft 23 may be modified as appropriate with respect to the shape of the flange and the consecutively formed stepped portion, as well as the manner in which the arm lever is joined, so long as a sufficiently large joint area can be formed between the flange and the arm lever 15. In addition, the magnetic sealing mechanisms 30A and 30B in the above-described embodiments may be modified as appropriate regarding the arrangement positions, shapes, and sizes of the magnet and pole plate. Furthermore, the respective constituent elements illustrated in the above-described drawings may be combined with one another as appropriate when implementing the invention.

### Reference Signs List

- 1: Fishing spinning reel
- 2: Reel body
- 3: Handle
- 5: Spool
- 10: Rotor
- 15: Arm lever
- 20: Fishing line guide device
- 22: Line slider
- 23: Support shaft
- 23b: Flange
- 28: Line roller
- 35: Screw member

## Claims

1. A fishing spinning reel comprising:
a spool around which a fishing line is wound;
a rotor comprising a pair of support arms that rotate around the spool;
arm levers respectively supported at distal end sides of the pair of support arms to be rotatable; and
a fishing line guide device that is provided between one of the arm levers and a line slider where one end side of a bail picking up a fishing line is provided, and that guides the fishing line to the spool,
wherein the fishing line guide device comprises a support shaft fixed between the arm lever and the line slider, and a line roller that is supported to be rotatable via a ball bearing positioned and fixed to the support shaft,
on the support shaft, a flange having a larger diameter than an inner ring of the ball bearing is formed on the arm lever side, and
the arm lever is fixed in abutment against the flange.

2. The fishing spinning reel according to claim 1, wherein the support shaft is fixed by caulking a portion protruding from the arm lever.

3. The fishing spinning reel according to claim 1, further comprising a screw member that fixes the support shaft and the line slider.

4. The fishing spinning reel according to claim 3, wherein the screw member is screwed from the line slider side.

5. The fishing spinning reel according to claim 3, wherein the screw member is screwed to the support shaft over an entire length of the line roller in an axial direction.

6. The fishing spinning reel according to claim 1, wherein an outer peripheral surface of the support shaft is formed in a stepwise manner from the flange outward in an axial direction.

7. The fishing spinning reel according to claim 1, wherein
a non-circular sectional portion is formed on the support shaft, and
the support arm is fitted to the non-circular sectional portion to prevent rotation.

8. The fishing spinning reel according to claim 1, wherein
an inner ring of the ball bearing is in contact with an outer peripheral surface of the support shaft, and
a contact surface between the arm lever and the support shaft is located outward of the line roller in an axial direction.

9. The fishing spinning reel according to claim 2, wherein
the arm lever side of the support shaft is formed to be bottomed, and
a bottomed portion protruding from the arm lever is fixed to the arm lever.

10. The fishing spinning reel according to claim 2, wherein
a portion of the support shaft in which the screw member is screwed is formed as a through-hole, and
a portion protruding from the arm lever is fixed to the arm lever.

11. The fishing spinning reel according to any one of claims 2, 9, and 10, wherein fixing of the support shaft to the arm lever is performed by high-spin processing.

12. The fishing spinning reel according to any one of claims 3 to **11,** wherein the arm lever, the support shaft, and the screw member are made of metal.
